# EUROPÄISCHE PATENTSCHRIFT

(11) **EP 0 369 155 B1**
(45) Veröffentlichungstag und Bekanntmachung des Hinweises auf die Patenterteilung: **03.02.1993**
(21) Anmeldenummer: 89118570.4
(22) Anmeldetag: 06.10.1989
(51) Int. Cl.: F02M 41/12, F16D 3/06

(54) **Kraftstoffeinspritzpumpe**
Fuel injection pump
Pompe d'injection de combustible

(30) Priorität: 12.11.1988 DE 8814197 U
(43) Veröffentlichungstag der Anmeldung: 23.05.1990
(73) Patentinhaber: ROBERT BOSCH GMBH, 70442 Stuttgart (DE)
(72) Erfinder: Fuessner, Paul, D-7032 Sindelfingen (DE); Nothdurft, Heinz, D-7000 Stuttgart 70 (DE); Simon, Helmut, D-7320 Göppingen (DE); Braun, Wolfgang, D-7257 Ditzingen (DE); Holbein, Werner, D-7255 Rutesheim 2 (DE); Linek, Karl-Heinz, D-7148 Remseck 4 (DE); Morgenstern, Paul, D-7000 Stuttgart 30 (DE)

(56) Entgegenhaltungen:
- DE-C- 550 377
- GB-A- 2 162 285

## Beschreibung

Die Erfindung betrifft eine Kraftstoffeinspritzpumpe für Brennkraftmaschinen nach der Gattung des Patentanspruchs 1. Bei einer durch die GB-A 2 162 285 bekannten Kraftstoffeinspritzpumpe dieser Art wird das Kreuzstück der Kreuzscheibenkupplung durch eine Schraubendruckfeder beaufschlagt, die zwischen der Stirnseite der Antriebswelle und dem Kreuzstück eingespannt ist. Dabei wird die überwiegende Länge der Schraubendruckfeder in einer axialen Ausnehmung der Antriebswelle angeordnet. Eine solche Anordnung bedarf einer aufwendigen zusätzlichen Bearbeitung der Antriebswelle, insbsondere auch dann, wenn die Schraubendruckfeder selbst in die Ausnehmung der Antriebswelle einrastet und zu diesem Zweck die Ausnehmung in Richtung Antriebswelle am Ende der Ausnehmung sich konisch erweitert.

Bei der erfindungsgemäßen Kraftstoffeinspritzpumpe gemäß Patentanspruch 1 ist eine wirkungsvolle, platzsparende und keine zusätzliche Bearbeitung der angrenzenden Teile, Antriebswelle oder Kreuzstück, bedingende Lösung geschaffen, die eine wirkungsvolle Dämpfung der Kreuzscheibenbewegung bewirkt.

### Zeichnung

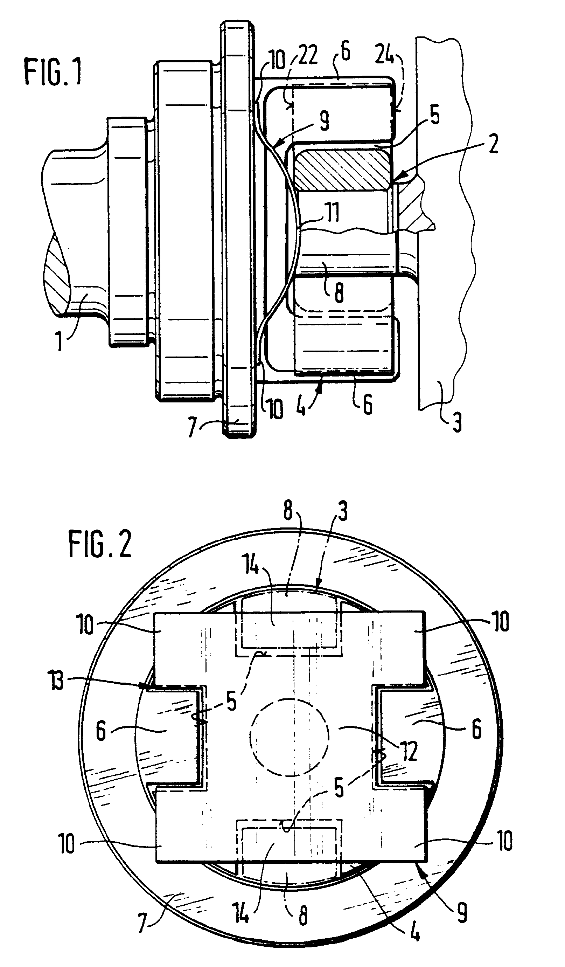

Ein Ausführungsbeispiel der Erfindung ist in der Zeichnung dargestellt und in der nachfolgenden Beschreibung näher erläutert. Es zeigen Figur 1 eine Kreuzscheibenkupplung einer Kraftstoffeinspritzpumpe mit einer Blattfeder als Dämpfungsglied und Figur 2 eine Draufsicht auf die Blattfeder gemäß Figur 1.

### Beschreibung des Ausführungsbeispieles

In einem nicht näher dargestellten Gehäuse einer Kraftstoffeinspritzpumpe ist eine Antriebswelle 1 drehbar gelagert. Die Antriebswelle 1 ist über eine Kreuzscheibenkupplung 2 mit einem Pump- und Verteilerglied über eine Hubscheibe 3 gekuppelt.

Die Kreuzscheibenkupplung 2 hat eine Kreuzscheibe 4 mit vier am Umfang gleichmäßig verteilte Nuten 5 bestimmter Weite. In zwei einander gegenüberliegenden Nuten 5 greifen Klauen 6 ein, die an einem Bund 7 der Antriebswelle 1 achsparallel abstehen und formschlüssig an den Flanken der Nuten 5 anliegen. Von der Seite der Hubscheibe 3 her greifen in die zwei anderen, um 90 Grad versetzten Nuten 5 zwei Klauen 8 ein, die achsparallel von der Hubscheibe 3 abstehen. Zwischen dem Bund 7, der Antriebswelle 1 und der Kreuzscheibe 4 ist eine Form-Blattfeder 9 angeordnet. Die Form-Blattfeder 9 ist H-förmig ausgebildet, wie in Figur 2 gezeigt. Die besteht aus zwei senkrechten Schenkeln 14 und einem Steg 12. Die beiden Schenkel 14 haben Enden 10, die am Bund 7 der Antriebswelle 1 aufliegen. Von den Enden 10 aus ist die Form-Blattfeder 9 konvex gewölbt entgegen einer ersten Biegung der Blattfeder um die Achse des Stegs 12 und liegt mit dem Steg 12, in dem der Scheitelpunkt des erhabenen Teils 11 angeordnet ist, an der Kreuzscheibe 4 an. Zwischen den beiden Schenkeln 14 und dem Quersteg 12 ist im unteren und oberen Teil der H-förmigen Blattfeder ein Freiraum 13 gebildet. Diese Freiräume 13 ermöglichen das Einfügen der Form-Blattfeder 9 in die sich gegenüberliegenden Klauen 6 der Antriebswelle 1. Die Form-Blattfeder 9 ist in einem Zwischenraum zwischen der Stirnseite der Antriebswelle und der Kreuzscheibe 4 angeordnet, der andererseits von den Klauen 6 begrenzt wird, und drückt diese gegen die Hubscheibe 3. Die Schenkel 14 der Form-Blattfeder 9 liegen formschlüssig an den Seitenflächen der Klauen 6 an und bilden die Führung der Form-Blattfeder 9.

Die Form-Blattfeder 9 wirkt als Dämpfungsglied und verhindert ein Aufprallen der Kreuzscheibe 4 auf die Antriebswelle 1 beim Hin- und Hergehen des Pump- und Verteilerglieds 3, wenn bei diesem Hin- und Hergehen des Pump- und Verteilerglieds 3 die Kreuzscheibe 4 infolge ihres Trägheitsverhaltens axial hin- und hergeschleppt wird.

## Patentansprüche

1. Kraftstoffeinspritzpumpe mit einer Antriebswelle (1), mit einem axial hin- und hergehenden und gleichzeitig rotierenden Pump- und Verteilerglied (3) und mit einer die Antriebswelle mit dem Pump- und Verteilerglied (3) verbindenden Kreuzscheibenkupplung (2), die an der Antriebswelle abtriebsseitig und an einem pump- und verteilerseitigen Teil (3) antriebsseitig jeweils ein einander gegengerichtetes Klauenpaar aufweist, zwischen denen eine Kreuzscheibe (4) angeordnet ist, dadurch gekennzeichnet, daß im Zwischenraum zwischen der Stirnseite der Antriebswelle (1), an der das eine Klauenpaar (6) angeordnet ist und der Kreuzscheibe (4), ein Dämpfungsglied (9) in Form einer H-förmig ausgebildeten Blattfeder angeordnet ist, die um die Achse des Stegs (12) der H-form eine eiste Biegung aufweist und vorzugsweise an den vier Enden (10) entgegen der ersten Biegung aufgebogen ist wobei die Enden (10) das Klauenpaar (6) der Antriebswelle (1) umfassen und sich auf der Stirnseite der Antriebswelle abstützen und der Steg (12) in Anlage an der Kreuzscheibe (4) ist und diese in Anlage am pump- und verteilerseitigen Teil (3) hält.

## Claims

1. Fuel injection pump having a drive shaft (1), having an axially reciprocating and simultaneously rotating pumping and distributing element (3) and having a cross-type plate coupling (2), which connects the drive shaft to the pumping and distributing element (3) and has a mutually opposed pair of claws respectively on the drive shaft, on the drive output side, and on a part (3) on the pumping and distributing side, on the drive input side, between which pairs of claws a cross-type plate (4) is arranged, characterised in that in the intermediate space between the end face of the drive shaft (1), on which the one pair of claws (6) is arranged, and the cross-type plate (4) there is arranged a damping element (9) in the form of a leaf spring of H-shaped design, which has a first bend about the axis of the web (12) of the H shape and is bent open, preferably at the four ends (10), oppositely to the first bend, the ends (10) embracing the pair of claws (6) of the drive shaft (1) and supporting themselves on the end face of the drive shaft, and the web (12) being in bearing contact with the cross-type plate (4) and maintaining the latter in bearing contact with the part (3) on the pumping and distributing side.

## Revendications

1. Pompe d'injection de carburant, avec un arbre de commande (1), avec un élément de pompe et de distribution (3) à mouvement de va-et-vient et en même temps de rotation et avec un accouplement à disques en croix (2) (joint Oldham) reliant l'arbre de commande à l'élément de pompe et de distribution (3), joint qui comprend, sur l'arbre d'entraînement du côté sortie et sur une pièce (3) située côté pompe et distributeur du côté entrée d'entraînement, respectivement un couple de pattes dirigées en sens opposé l'une à l'autre, entre lesquels est placé un disque en croix (4), caractérisée en ce que, dans l'espace intermédiaire entre la face frontale de l'arbre d'entraînement (1), sur lequel est disposé un couple de pattes (6) et le disque en croix (4), est placé un élément amortisseur (9) sous la forme d'un ressort à lames réalisé sous forme d'un H, qui comprend autour de l'axe de l'entretoise (12) sous forme de H, une première courbure et qui, de préférence, est plié aux quatres extrémités (10) en sens opposé à la première courbure, les extrémités (10) entourant le couple de pattes (6) de l'arbre d'entraînement (1) et s'appuyant sur la face frontale de l'arbre d'entraînement et l'entretoise (12) étant en position sur le disque en croix (4) et maintenant celui-ci en butée contre la pièce (3) du côté pompe et distributeur.
